# EUROPÄISCHE PATENTSCHRIFT

(11) **EP 0 921 704 B1**
(45) Veröffentlichungstag und Bekanntmachung des Hinweises auf die Patenterteilung: **21.07.2004**
(21) Anmeldenummer: 98123176.4
(22) Anmeldetag: 04.12.1998
(51) Int. Cl.: H04Q 11/04, H04J 3/16

(54) **Verfahren zur teilnehmerseitigen Übertragung von Circuit-Switching-Daten und Packet-Switching-Daten in einem Teilnehmeranschlussleitungsnetz**
Method for subscriber information transfer of circuit switching data and packet switching data in a local line distribution network
Procédé pour le transfer d'information d'abonné concernant des données de commutation de circuit et des données de commutation des paquets dans un réseau distributif de ligne local

(30) Priorität: 05.12.1997 DE 19754128
(43) Veröffentlichungstag der Anmeldung: 09.06.1999
(73) Patentinhaber: SIEMENS AKTIENGESELLSCHAFT, 80333 München (DE)
(72) Erfinder: Huber, Manferd, 82152 Krailling (DE)

(56) Entgegenhaltungen:
- EP-A- 0 661 901
- WO-A-95/32597
- HUBER M N ET AL: "MODELLING OF A MULTI-QUEUE POLLING SYSTEM WITH ARBITRARY SERVER INTERRUPTS FOR THE IDLE-SLOT-CONCATENATION PACKET SWITCHING PRINCIPLE IN A HYBRID CS/PS NODE" TELETRAFFIC SCIENCE FOR NEW COST EFFECTIVE SYSTEMS, NETWORKS AND SERVICES, TORINO, JUNE 1 - 8, 1988, Bd. 1, Nr. CONGRESS 12, 1. Juni 1988, Seiten 521-528, XP000279785 BONATTI M
- SCHOBLICK R: "DATENUBERTRAGUNG IM EURO-ISDN-D-KANAL" FUNKSCHAU, Nr. 19, 30. August 1996, Seiten 55-57, XP000623677
- MORITA S ET AL: ""ELASTIC BASKET SWITCHING" APPLICATION TO DISTRIBUTED PBK" COMMUNICATIONS - SOUND TO LIGHT, SEATTLE, JUNE 7 - 10, 1987, Bd. 2, 9. Juni 1972, Seiten 789-793, XP002063261 INSTITUTE OF ELECTRICAL AND ELECTRONICS ENGINEERS

## Beschreibung

In heutigen diensteintegrierenden Digitalnetzen (Schmalband-ISDN) kann ein Teilnehmer einen Basisanschluss (Basic Access, BA) mit einer zwei 64-kbit/s-Nutzkanäle und einen 16-kbit/s-Steuerkanal umfassenden (2.B+D)-Kanalstruktur oder einen Primärmultiplexanschluss (Primary Rate Access, PA) mit maximal 30 (64-kbit/s-)B-Kanälen und einem (hier ebenfalls 64-kbit/s-) D-Kanal haben. Für viele kleine Büros und auch Privatwohnungen, d.h. im sog. SOHO (Small Office and Home)-Bereich, dürfte allerdings der Basisanschluß mit seiner Bitrate von 2'64 + 16 kbit/s zukünftig nicht mehr genügen, ohne dass indessen ein Primärmultiplexanschluss benötigt wird. Zugleich werden im Small-Office-and-Home-Bereich neben ISDN-Endgeräten auch ATM-Terminals, ggf. auch Network Computer und ähnliches, zur Anwendung kommen.

Zur teilnehmerseitigen Informationsübertragung in einem Teilnehmeranschlußleitungsnetz ist es bekannt, einen in Zeitfächer konstanter Länge aufgeteilten Informationstransportrahmen vorzusehen, in dem ein Teil dieser Zeitfächer für Synchronisierungs-, Signalisierungs- bzw. andere Sonderzwecke reserviert ist und die übrigen Zeitfächer Nutzkanal-Zeitfächer sind, die jeweils mit ISDN-Nutzsignalworten (CS-Daten, in Anlehnung an den englischsprachigen Ausdruck Circuit Switching) oder mit Paketdaten (PS-Daten, in Anlehnung an den englischsprachigen Ausdruck Packet Switching) belegbar sind, wobei die nicht mit ISDN-Nutzsignalworten belegten Nutzkanal-Zeitfächer zu einem verbleibenden Paketdaten-Transportkanal (ISC-Kanal, in Anlehnung an den englischsprachigen Ausdruck Idle Slot Concatenation) zusammengefaßt werden [M.N. Huber und P.J. Kühn: "Modelling of a Multi-Queue Polling System with Arbitrary Server Interrupts for the Idle-Slot-Concatenation Packet Switching Principle in a Hybrid CS/PS Node", Proceedings of the 12th International Teletraffic Congress, Torino, 1988].

Dabei können zwischen Teilnehmer und Netz neben einer ISDN-Schnittstelle entsprechende weitere, jeweils anwendungsindividuelle Teilnehmer-Netz-Schnittstellen vorzusehen sein. Will man nur mit einer ISDN-Schnittstelle auskommen, muss man für Nicht-ISDN-Anwendungen durchschaltevermittelte Verbindungen bis zu einem Packet-Handler vorsehen.

Die Erfindung stellt sich die Aufgabe, eine für ein derartiges Anwendungsprofil, wie es eingangs umrissen wurde, geeignete Schnittstelle zwischen Teilnehmer und Netz zu schaffen, welche ISDN-Kommunikation und paketorientierte Kommunikation effizient unterstützt.

Die Erfindung betrifft ein Verfahren zur teilnehmerseitigen Übertragung von Circuit-Switching-Daten und Packet-Switching-Daten in einem Teilnehmeranschlußleitungsnetz mit Hilfe eines synchronen, in eine der Übertragungsbitrate entsprechende Anzahl von Zeitfächern jeweils gleicher Länge aufgeteilten Informationstransportrahmens konstanter Dauer, in dem ein Teil dieser Zeitfächer für Synchronisierungs-, Signalisierungs- bzw. andere Sonderzwecke reserviert ist und die übrigen Zeitfächer Nutzkanal-Zeitfächer sind, die jeweils mit Circuit-Switching-(CS-)Daten oder mit Packet-Switching-(PS-)Daten belegbar sind, wobei die nicht mit Circuit-Switching-(CS-)Daten belegten Nutzkanal-Zeitfächer zu einem verbleibenden Paketdaten-(PS-Daten)-Transportkanal zusammengefaßt sind; dieses Verfahren ist erfindungsgemäss dadurch gekennzeichnet, dass zur Übertragung einer neuen sog. Nicht-ISDN-Protokolldateneinheit sendeseitig in ein in jedem Pulsrahmen vorgesehenes START-Zeitfach bei momentan freiem verbleibenden Paketdaten-Transportkanal ein den Offset zu dessen erstem Zeitfach im Pulsrahmen angebender Offset-Zeiger eingetragen wird, wonach die Übertragung der neuen Nicht-ISDN-Protokolldateneinheit mit dem angezeigten Zeitfach beginnt, dass die Übertragung einer neuen Nicht-ISDN-Protokolldateneinheit bei momentan belegtem verbleibenden Paketdaten-Transportkanal nahtlos an die Übertragung der den verbleibenden Paketdaten-Transportkanal gerade belegenden Nicht-ISDN-Protokolldateneinheit anschliesst, wobei in das START-Zeitfach der neue Offset-Zeiger eingetragen wird, und dass empfangsseitig jeweils nach Empfang eines Offset-Zeigers mit dem angezeigten Offset die Zusammensetzung einer bisherigen Nicht-ISDN-Protokolldateneinheit beendet und die Zusammensetzung der neuen Nicht-ISDN-Protokolldateneinheit begonnen wird; dabei kann gemäß weiterer Ausgestaltung der Erfindung jeder Nicht-ISDN-Protokolldateneinheit ein deren Verkehrstyp kennzeichnendes Datenfeld vorangestellt sein.

Die Erfindung, die davon ausgeht, dass in ein und demselben Pulsrahmen nur eine Nicht-ISDN-Protokolldateneinheit beginnen kann, ist mit dem Vorteil verbunden, dass einzelne Bitfehler keinen Verlust der Nachrichtensynchronisation beim Empfänger und keinen damit verbundenen Verlust an sich ungestörter Nachrichten nach sich ziehen.

Weitere Besonderheiten der Erfindung werden aus der nachfolgenden weiteren Erläuterung der Erfindung an Hand der Zeichnung ersichtlich. Dabei zeigt
- FIG 1: ein Ausführungsbeispiel eines Informationstransportrahmens sowie der Einfügung von Nicht-ISDN-Protokolldateneinheiten in den verbleibenden Paketdaten-Transportkanal dieses Informationstransportrahmens;
- FIG 2: zeigt nähere Einzelheiten einer Nicht-ISDN-Protokolldateneinheit.

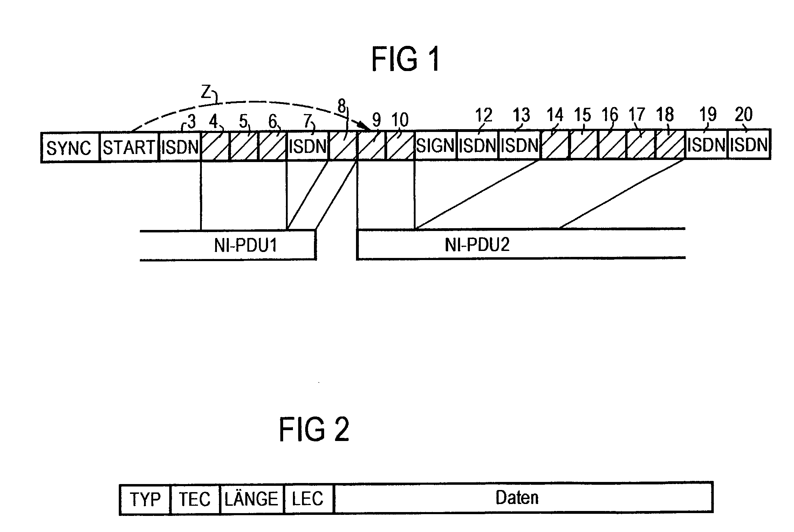

FIG 1 zeigt ein Ausführungsbeispiel eines Informationstransportrahmens mit 20 untereinander gleich langen (z.B. 8-bit-) Zeitfächern, von denen das erste Zeitfach SYNC zur Rahmensteuerung und das elfte Zeitfach SIGN zur ISDN-Signalisierung vorgesehen sein möge. Diese Verwendung des ersten und des elften Zeitfachs zur Übertragung solcher Steuerinformationen kann fest vorgegeben sein. Die Zeitfächer 3 bis 10 und 12 bis 20 sind Nutzkanal-Zeitfächer, die jeweils mit ISDN-Nutzsignalworten (bzw., in anderen Worten gesagt, Circuit-Switching-Daten) oder mit Paketdaten (in anderen Worten: Packet-Switching-Daten) belegbar sind; dabei bilden die jeweils gerade nicht mit ISDN-Nutzsignalworten belegten Nutzkanal-Zeitfächer einen jeweils verbleibenden Paketdaten-Transportkanal (ISC-Kanal). Im dargestellten Beispiel mögen die Zeitfächer 3, 7, 12, 13, 19 und 20 mit ISDN-Nutzsignalworten belegt sein, mit denen beispielsweise Faksimile-Information oder Sprach-Information übertragen wird. Die verbleibenden Nutzkanal-Zeitfächer 4, 5, 6, 8, 9, 10, 14, 15, 16, 17 und 18 bilden gemeinsam den ISC (Idle Slot Concatenation)-Kanal zur Übertragung von Nicht-ISDN-Protokolldateneinheiten (Non-ISDN Protocoll Data Units) NI-PDU.

Bei einer solchen Nicht-ISDN-Protokolldateneinheit kann es sich beispielsweise um eine ATM-Zelle oder um ein Frame-Relais-Paket handeln. Dabei möge, wie dies auch in FIG 2 skizziert ist, jede Nicht-ISDN-Protokolldateneinheit NI-PDU mit einem deren Art (Verkehrstyp), z.B. ATM-Zelle, kennzeichnenden Datenfeld TYP beginnen. Ausserdem kann jede Nicht-ISDN-Protokolldateneinheit NI-PDU auch mit einem deren Länge kennzeichnenden Datenfeld LÄNGE versehen sein, wie dies ebenfalls in FIG 2 skizziert ist. Ein solches LÄNGE-Datenfeld erübrigt sich bei Nachrichten konstanter Länge oder bei Nachrichten, die an einer definierten Stelle im Nachrichtenkopf ein Längenfeld haben. Wie aus FIG 2 ersichtlich ist, kann beiden Datenfeldern TYP und LÄNGE jeweils ein Datensicherungsfeld TEC bzw. LEC (EC = Error Coding) zur Fehlererkennung oder -korrektur nachfolgen.

Um wieder auf FIG 1 zurückzukommen, so ist nun am Anfang jedes Pulsrahmens ein Zeitfach START vorgesehen; im Ausführungsbeispiel ist dies das zweite Zeitfach. Zur Übertragung einer neuen Nicht-ISDN-Protokolldateneinheit wird sendeseitig in dieses START-Zeitfach bei momentan freiem verbleibenden Paketdaten-Transportkanal ein den Offset zu dessen erstem Zeitfach im Pulsrahmen angebender Offset-Zeiger eingetragen, wonach die Übertragung der neuen Nicht-ISDN-Protokolldateneinheit mit dem angezeigten Zeitfach beginnt.
Bei momentan belegtem verbleibenden Paketdaten-Transportkanal schliesst die Übertragung einer neuen Nicht-ISDN-Protokolldateneinheit, im Ausführungsbeispiel gemäß FIG 1 der Nicht-ISDN-Protokolldateneinheit NI-PDU2, nahtlos an die Übertragung der den verbleibenden Paketdaten-Transportkanal gerade belegenden Nicht-ISDN-Protokolldateneinheit, im Ausführungsbeispiel gemäß FIG 1 der Nicht-ISDN-Protokolldateneinheit NI-PDU1, an, wobei in das START-Zeitfach der neue Offset-Zeiger eingetragen wird. Ein solcher - mit Z bezeichneter - Zeiger ist auch in FIG 1 angedeutet ist.
Empfangsseitig beginnt dann jeweils nach Empfang eines Offset-Zeigers (Z in FIG 1) mit dem von diesem angezeigten Offset ggf. unter Beendigung der Zusammensetzung einer bisherigen Nicht-ISDN-Protokolldateneinheit (NI-PDU1 in FIG 1) - die Zusammensetzung der neuen Nicht-ISDN-Protokolldateneinheit (NI-PDU2 in FIG 1), ohne dass dies hier noch weiterer Erläuterungen bedarf.

Enthält ein Pulsrahmen für den Transport von Nicht-ISDN-Protokolldateneinheiten NI-PDU (in FIG 1) beispielsweise bis zu 31 8-Bit-Zeitfächer, so benötigt man für den Eintrag des Offset-Zeigers im START-Zeitfach 5 Bits; die restlichen 3 Bits des (im Beispiel 8-Bit-) START-Zeitfachs können dann zur Fehlersicherung verwendet werden. Ordnet man z.B. solchen 5 Offset-Zeiger-Bits b7 bis b3 ein Parity-Bit b2 zu und ordnet man ausserdem den Bits b7, b5, b3 ein Parity-Bit b1 und den Bits b6, b4, b2 ein Parity-Bit b0 zu, so lassen sich 1, 3, 5, 7 Fehler sicher erkennen, und teilweise sind auch Mehrfachfehler erkennbar.

Das jede Nicht-ISDN-Protokolldateneinheit NI-PDU mit einem deren Art kennzeichnende Datenfeld TYP kann 4 Bits umfassen, um 16 Verkehrstypen zu unterscheiden. Zur Fehlersicherung kann dann das von ATM-AAL Typ 1 zur Sicherung der Sequence Number bekannte Verfahren benutzt werden.

## Patentansprüche

1. Verfahren zur teilnehmerseitigen Übertragung von Circuit-Switching-Daten und Packet-Switching-Daten in einem Teilnehmeranschlußleitungsnetz mit Hilfe eines synchronen, in eine der Übertragungsbitrate entsprechende Anzahl von Zeitfächern konstanter Länge aufgeteilten Informationstransportrahmens konstanter Dauer, in dem ein Teil dieser Zeitfächer für Synchronisierungs-, Signalisierungs- bzw. andere Sonderzwecke reserviert ist und die übrigen Zeitfächer Nutzkanal-Zeitfächer sind, die jeweils mit Circuit-Switching-Daten oder mit Packet-Switching-Daten belegbar sind, wobei die nicht mit Circuit-Switching-Daten belegten Nutzkanal-Zeitfächer zu einem verbleibenden Paketdaten-Transportkanal zusammengefaßt werden,
**dadurch gekennzeichnet,**
**dass** zur Übertragung einer neuen sog. Nicht-ISDN-Protokolldateneinheit sendeseitig in ein in jedem Pulsrahmen vorgesehenes START-Zeitfach bei momentan freiem verbleibenden Paketdaten-Transportkanal ein den Offset zu dessen erstem Zeitfach im Pulsrahmen angebender Offset-Zeiger eingetragen wird, wonach die Übertragung der neuen Nicht-ISDN-Protokolldateneinheit mit dem angezeigten Zeitfach beginnt,
**dass** die Übertragung einer neuen Nicht-ISDN-Protokolldateneinheit bei momentan belegtem verbleibenden Paketdaten-Transportkanal nahtlos an die Übertragung der den verbleibenden Paketdaten-Transportkanal gerade belegenden Nicht-ISDN-Protokolldateneinheit anschliesst, wobei in das START-Zeitfach der neue Offset-Zeiger eingetragen wird,
und **dass** empfangsseitig jeweils nach Empfang eines Offset-Zeigers mit dem angezeigten Offset die Zusammensetzung einer bisherigen Nicht-ISDN-Protokolldateneinheit beendet und die Zusammensetzung der neuen Nicht-ISDN-Protokolldateneinheit begonnen wird.

2. Verfahren nach Anspruch 1,
**dadurch gekennzeichnet,**
**dass** jeder Nicht-ISDN-Protokolldateneinheit ein deren Verkehrstyp kennzeichnendes Datenfeld vorangestellt wird.

3. Verfahren nach Anspruch 1 oder 2,
**dadurch gekennzeichnet,**
**dass** jeder Nicht-ISDN-Protokolldateneinheit ein deren Länge kennzeichnendes Datenfeld vorangestellt wird.

4. Verfahren nach Anspruch 2 oder 3,
**dadurch gekennzeichnet,**
**dass** dem Datenfeld ein Datensicherungsfeld nachfolgt.

## Claims

1. A method for subscriber-side transmission of circuit-switching data and packet-switching data in a local subscriber line distribution network with the aid of a synchronous information transport frame of constant duration which is subdivided into a number of time slots of constant length corresponding to the transmission bit rate, in which information transport frame some of the said time slots are reserved for synchronisation, signalling and other special purposes and the remaining time slots are user information channel time slots, each of which can be filled with circuit-switching data or packet-switching data, the user information channel time slots not filled with circuit-switching data being combined into a remaining packet data transport channel,
**characterised in that**
on the send side, in order to transmit a new, so-called non-ISDN protocol data unit, an offset pointer indicating the offset relative to the first time slot in the pulse frame is entered into a START time slot provided in each pulse frame with a currently free remaining packet data transport channel, after which the transmission of the new non-ISDN protocol data unit starts with the indicated time slot,
that the transmission of a new non-ISDN protocol data unit with a currently busy remaining packet data transport channel seamlessly succeeds the transmission of the non-ISDN protocol data unit currently occupying the remaining packet data transport channel, the new offset pointer being entered into the START time slot,
and that on the receive side, after receipt of an offset pointer with the indicated offset in each case, the composition of a previous non-ISDN protocol data unit is terminated and the composition of the new non-ISDN protocol data unit is started.

2. The method according to claim 1,
**characterised in that**
each non-ISDN protocol data unit is prefixed by a data field characterising its traffic type.

3. The method according to claim 1 or 2,
**characterised in that**
each non-ISDN protocol data unit is prefixed by a data field characterising its length.

4. The method according to claim 1 or 2,
**characterised in that**
the data field is followed by an error coding field.

## Revendications

1. Procédé pour le transfert côté abonné de données par commutation de circuit et de données par commutation de paquets dans un réseau de lignes de raccordement d'abonnés à l'aide d'une trame de transport d'informations synchrone, de durée constante, répartie en un nombre de créneaux temporels de longueur constante, correspondant au débit binaire, dans laquelle une partie de ces créneaux temporels est réservée à des fins de synchronisation, de signalisation resp. à d'autres fins particulières et les autres créneaux temporels sont des créneaux temporels à canal utile qui peuvent être respectivement affectés avec des données par commutation de circuit ou avec des données par commutation par paquets, les créneaux temporels à canal utile non affectés avec des données par commutation de circuit étant regroupés en un canal restant de transport de données par paquets,
**caractérisé en ce que**
pour le transfert, côté émission, d'une nouvelle dite unité de données de protocole non RNIS dans un créneau temporel START prévu dans chaque trame d'impulsions, lorsque le canal restant de transport de données par paquets est momentanément libre, un indicateur de décalage indiquant le décalage dans la trame d'impulsions par rapport au premier créneau temporel de ce canal restant de transport de données par paquets est inscrit, sur quoi le transfert de la nouvelle unité de données de protocole non RNIS commence avec le créneau temporel affiché,
**en ce que** le transfert d'une nouvelle unité de données de protocole non RNIS, lorsque le canal restant de transport de données par paquets est momentanément affecté, a lieu sans interruption après le transfert de l'unité de données de protocole non RNIS affectant momentanément le canal restant de transport de données par paquets, le nouvel indicateur de décalage étant inscrit dans le créneau temporel START,
et **en ce que**, du côté réception, la composition d'une unité de données de protocole non RNIS qui a existé jusqu'ici est respectivement terminée après la réception d'un indicateur de décalage avec le décalage affiché et **en ce que** la composition de la nouvelle unité de données de protocole non RNIS est commencée.

2. Procédé selon la revendication 1,
**caractérisé en ce**
**qu'**un champ de données caractérisant le type de trafic de l'unité de données de protocole non RNIS est placé en tête de chaque unité de données de protocole non RNIS.

3. Procédé selon la revendication 1 ou 2,
**caractérisé en ce**
**qu'**un champ de données caractérisant la longueur de l'unité de données de protocole non RNIS est placé en tête de chaque unité de données de protocole non RNIS.

4. Procédé selon la revendication 2 ou 3,
**caractérisé en ce que**
un champ de sauvegarde des données suit le champ de données.
